# EUROPÄISCHE PATENTANMELDUNG

(11) **EP 3 682 988 A1**
(43) Veröffentlichungstag der Anmeldung: **22.07.2020**
(21) Anmeldenummer: 20151270.4
(22) Anmeldetag: 10.01.2020
(51) Int. Cl.: B22F 3/105, B22F 5/00, B22F 5/04, B22F 7/02, B22F 7/06, B23K 15/00, B23K 26/342, B29C 64/153, B33Y 10/00, B33Y 80/00, F01D 5/28

(54) **VERFAHREN ZUR HERSTELLUNG VON LAUFSCHAUFELN AUS NI - BASISLEGIERUNGEN UND ENTSPRECHEND HERGESTELLTE LAUFSCHAUFEL**

(30) Priorität: 18.01.2019 DE 102019200620
(71) Anmelder: MTU Aero Engines AG, 80995 München (DE)
(72) Erfinder: Fried, Markus, 80995 München (DE)

(57) **Zusammenfassung**

Die vorliegende Erfindung betrifft ein Verfahren zur Herstellung eines Bauteils (21) einer Strömungsmaschine aus einer Metalllegierung sowie ein entsprechend hergestelltes Bauteil, wobei das Verfahren folgende Schritte umfasst:
Definieren von mindestens einem ersten Bauteilbereich (22), der ein erstes Eigenschaftsprofil aufweisen soll, und von mindestens einem zweiten Bauteilbereich (23,24), der ein zweites Eigenschaftsprofil aufweisen soll, welches von dem ersten Eigenschaftsprofil unterschiedlich ist, Bereitstellen mindestens eines Pulvers aus der Metalllegierung oder von mehreren unterschiedlichen Pulvern von Bestandteilen der Metalllegierung,
additive Fertigung des Bauteils (21) aus dem mindestens einen Pulver, wobei das Pulver zur stoffschlüssigen Verbindung der Pulverpartikel untereinander und mit einem Substrat oder einem bereits hergestellten Teil des Bauteils aufgeschmolzen wird und wobei die Pulverpartikel zur Ausbildung des ersten Bauteilbereichs und die Pulverpartikel zur Ausbildung des zweiten Bauteilbereichs unterschiedlich sind und / oder unter derart unterschiedlichen Bedingungen additiv abgeschieden werden, sodass sich im ersten Bauteilbereich und im zweiten Bauteilbereich unterschiedliche Gefüge des abgeschiedenen Materials ergeben.

## Beschreibung

### HINTERGRUND DER ERFINDUNG

### GEBIET DER ERFINDUNG

Die vorliegende Erfindung betrifft ein Verfahren zur Herstellung eines Bauteils einer Strömungsmaschine aus einer Metalllegierung, insbesondere einer Schaufel einer Gas - oder Flugturbine sowie ein entsprechend hergestelltes Bauteil, insbesondere eine Laufschaufel einer Gas - oder Flugturbine aus einer Ni - Basislegierung.

### STAND DER TECHNIK

Es ist im Stand der Technik bekannt, in Strömungsmaschinen, wie stationären Gasturbinen oder Flugturbinen, Bauteile, die hohen mechanischen Belastungen und hohen Temperaturen sowie aggressiven Medien ausgesetzt sind, zumindest teilweise aus hochwarmfesten Legierungen, wie beispielsweise Ni -, Fe - oder Co - Basislegierungen und insbesondere entsprechenden Superlegierungen zu bilden. Insbesondere Laufschaufeln, die bei hohen Betriebstemperaturen aufgrund der auftretenden Fliehkräfte hohen mechanischen Belastungen ausgesetzt sind, werden üblicherweise aus Ni - Basissuperlegierungen gebildet.

Unter Basislegierungen werden Legierungen verstanden, deren Hauptbestandteil das angegebene Element, wie z.B. Nickel, ist und die zusätzliche Legierungsbestandteile aufweisen, um ein gewünschtes Eigenschaftsprofil aufweisen. Unter Superlegierungen werden entsprechende Basislegierungen verstanden, die eine Zusammensetzung mit zahlreichen Legierungsbestandteilen zur Ausbildung einer komplexen Gefügestruktur aufweisen, wie beispielsweise Chrom, Molybdän, Titan, Aluminium, Niob, Eisen und Kohlenstoff im Falle von Ni - Basissuperlegierungen, um durch Bildung von Ausscheidungen hohe Festigkeitswerte zu erzielen.

Üblicherweise werden beispielsweise Laufschaufeln aus Ni - Basissuperlegierungen, wie z.B. die unter der Handelsbezeichnung IN 718 bekannte Legierung, durch Feingussverfahren endkonturnah hergestellt. Allerdings bedingt die Geometrie der Laufschaufeln mit einem eher großvolumigen Schaufelfuß und einem eher dünn dimensionierten Schaufelblatt bzw. Deckband im Übergangsbereich zwischen Schaufelfuß und Schaufelblatt, dass in den dünnwandigen Bereichen ein feinkörniges Gefüge durch eine hohe Abkühlungsrate und die dadurch bedingte hohe Keimbildungsrate erzeugt wird, während im großvolumigen Bereich des Schaufelfußes mit geringerer Abkühlungsrate und geringerer Keimbildungsrate ein grobkörniges Gefüge gebildet wird. Auch Ausscheidungen, wie Karbide, werden im großvolumigen Bereich eher mit größerer Korngröße gebildet, während in Bereichen der Laufschaufeln mit dünnerem Querschnitt feinkörnige Ausscheidungen, wie Karbide, gebildet werden.

Allerdings ist es für den Einsatz der Laufschaufeln eher von Interesse eine andere Gefügeausbildung vorzusehen, da die grobkörnige Ausbildung im Schaufelfußbereich zu ungünstigen Ermüdungseigenschaften in diesem Bereich der Laufschaufeln führt, während die feinkörnige Gefüge Ausbildung im Schaufelblattbereich einen ungünstigen Einfluss auf die Kriechbeständigkeit der Laufschaufeln aufweist. Die ungünstige Gefügeausbildung bei der Herstellung durch Feinguss kann gemäß dem Stand der Technik nur durch aufwändige Wärmebehandlungsverfahren beseitigt werden.

### OFFENBARUNG DER ERFINDUNG

### AUFGABE DER ERFINDUNG

Es ist deshalb Aufgabe der vorliegenden Erfindung ein Verfahren zur Herstellung von Bauteilen eine Strömungsmaschine und insbesondere von Laufschaufeln aus Ni - Basislegierungen bereitzustellen, bei welchem ein günstiges Eigenschaftsprofil in einfacher Weise eingestellt werden kann. Insbesondere soll eine Laufschaufeln hergestellt werden können, welche im Fußbereich gute Ermüdungseigenschaften und insbesondere eine hohe Ermüdungsfestigkeit aufweist, während im Schaufelblattbereich bzw. im Bereich eines Deckbandes eine gute Kriechbeständigkeit gegeben sein soll. Zudem soll das Herstellungsverfahren einfach und zuverlässig anwendbar sein.

### TECHNISCHE LÖSUNG

Diese Aufgabe wird gelöst durch ein Verfahren mit den Merkmalen des Anspruchs 1 sowie ein Bauteil mit den Merkmalen des Anspruchs 12. Vorteilhafte Ausgestaltungen sind Gegenstand der abhängigen Ansprüche.

Die Erfindung schlägt für eine endkonturnahe Herstellung eines Bauteils einer Strömungsmaschine und insbesondere einer Laufschaufeln einer stationären Gasturbine oder einer Flugturbine vor, das Bauteil durch ein additives Fertigungsverfahren, auch generatives Herstellungsverfahren genannt, herzustellen. Bei einem derartigen Verfahren, wie beispielsweise dem selektiven Laserstrahlschmelzen, dem selektiven Laserstrahlsintern, dem selektiven Elektronenstrahlschmelzen, dem selektiven Elektronenstrahlsintern oder dem Auftragsschweißen wird das Bauteil aus mindestens einem Pulver lagenweise aufgebaut, indem das Pulver entsprechend der Querschnittsform in der gerade aufzubauenden Ebene stoffschlüssig und insbesondere durch Aufschmelzen der Pulverpartikel und anschließendes Erstarren mit einem Substrat bzw. einem bereits hergestellten Teil des Bauteils verbunden wird. Um unterschiedliche Eigenschaftsprofile in dem Bauteil zu erreichen, wird die additive Fertigung in verschiedenen Bauteilbereichen, die verschiedene Eigenschaftsprofile aufweisen sollen, mit unterschiedlichen Pulverpartikeln und / oder unterschiedlichen Prozessparametern durchgeführt, sodass sich in den unterschiedlichen Bauteilbereichen, die unterschiedliche Eigenschaften aufweisen sollen, unterschiedliche Gefüge des abgeschiedenen Materials ausbilden. Dadurch kann trotz der einstückigen und homogenen Ausbildung des Bauteils aus einem Werkstoff mit gleicher chemischer Zusammensetzung eine unterschiedliche Ausbildung von Eigenschaften über dem Bauteil erreicht werden.

Entsprechend kann zunächst bei der Herstellung des Bauteils mindestens eine erster Bauteilbereich definiert werden, wie beispielsweise der Fußbereich einer Laufschaufel, der ein erstes Eigenschaftsprofil aufweisen soll, wie beispielsweise eine hohe Ermüdungsfestigkeit. Darüber hinaus kann mindestens ein zweiter Bauteilbereich definiert werden, der ein zweites Eigenschaftsprofil aufweisen soll, welches sich von dem ersten Eigenschaftsprofile unterscheidet, wobei es sich beispielsweise um den Bereich des Schaufelblatts handeln kann, welches eine hohe Kriechfestigkeit aufweisen soll.

Für die additive Fertigung wird dann entsprechend mindestens ein Pulver aus der Metalllegierung, aus der das Bauteil einstückig gefertigt werden soll, bereitgestellt. Es können jedoch auch mehrere unterschiedliche Pulver verwendet werden, die sich beispielsweise in ihrer chemischen Zusammensetzung und / oder in der Größenverteilung der Pulverpartikel unterscheiden.

Obwohl das Bauteil üblicherweise homogen aus einem Werkstoff mit gleicher chemischer Zusammensetzung gebildet sein kann, können Pulver mit unterschiedlicher chemischer Zusammensetzung eingesetzt werden, wobei durch die unterschiedlichen Pulver der Werkstoff, aus dem das Bauteil hergestellt werden soll, bei der Herstellung legiert wird. Allerdings kann auch bereits ein fertig legiertes Pulver, also Pulverpartikel mit der gleichen chemischen Zusammensetzung wie das herzustellende Bauteil Verwendung finden.

Hinsichtlich ihrer Größenverteilung unterschiedliche Pulverpartikel können eingesetzt werden, um unterschiedliche Gefüge in den verschiedenen Bauteilbereichen, also dem mindestens einen ersten Bauteilbereich und dem mindestens einen zweiten Bauteilbereich, und somit unterschiedliche Eigenschaften in den Bauteilbereichen einzustellen.

Zusätzlich oder alternativ ist es möglich zur Einstellung verschiedener Gefüge in den verschiedenen Bauteilbereichen die Abscheideparameter bzw. Prozessparameter für die additive Herstellung in diesen Bauteilbereichen unterschiedlich einzustellen.

So können in Abhängigkeit von dem verwendeten additiven Verfahren eine Vielzahl verschiedener Parameter verwendet werden, um unterschiedliche Gefügeausbildungen und somit unterschiedliche Eigenschaftsprofile in den verschiedenen Bauteilbereichen einzustellen. Insbesondere kann die Aufheizenergie, die zum Aufheizen bzw. Schmelzen der Pulverpartikel eingesetzt wird, in den verschiedenen Bauteilbereichen unterschiedlich gewählt werden. Beispielsweise kann die Strahlenergie, mit der ein Laser - oder Elektronenstrahl auf das aufzuschmelze Pulver gerichtet wird, unterschiedlich gewählt werden. Auch die Vorschubgeschwindigkeit und somit die Verweildauer beispielsweise eines hochenergetischen Strahls in einem bestimmten Pulverbereich kann variiert werden. Ferner können die Aufschmelztemperaturen oder die Vorwärmtemperaturen des Pulvermaterials, welches vor dem Aufschmelzen beispielsweise durch Strahlungsheizung oder induktive Heizung vorgewärmt kann werden kann, können zur Einstellung unterschiedlicher Gefüge verändert werden, genauso wie die Haltezeiten des Pulvers im aufgeschmolzenen Zustand. Zudem ist es möglich unterschiedliche Aufschmelzraten und unterschiedliche Abkühlbedingungen mit unterschiedlichen Abkühlgeschwindigkeiten sowie unterschiedlichen Temperaturgradienten in den verschiedenen Bauteilbereichen bei der additiven Fertigung einzustellen. Auch weitere Parameter, wie beispielsweise ein unterschiedlicher Umgebungsdruck der umgebenden Atmosphäre, unterschiedliche Zusammensetzung der umgebenden Atmosphäre können für die gezielte Einstellung eines Gefüges eingestellt werden. Auch die allgemeine Abscheidegeschwindigkeit der einzelnen Lagen in den verschiedenen Bauteilbereichen kann unterschiedlich gewählt werden, wie beispielsweise durch verschiedene Vorschubgeschwindigkeiten eines hochenergetischen Strahls, beispielsweise eines Laserstrahls oder Elektronenstrahls zum Aufschmelzen des Pulvers, oder unterschiedlichen Materialflüssen beim Auftragsschweißen.

Die eingesetzten Pulverpartikel und / oder die Prozessparameter der additiven Herstellung können nicht nur zwischen einem ersten Bauteilbereich und einem zweiten Bauteilbereich unterschiedlich vorgesehen sein, sondern können auch innerhalb des ersten und / oder zweiten Bauteilbereichs oder im Bereich der Übergänge zwischen dem ersten und dem zweiten Bauteilbereich variieren, sodass im ersten und / oder zweiten Bauteilbereich und oder im Übergangsbereich zwischen erstem Bauteilbereich und zweitem Bauteilbereich ein Gradientenwerkstoff mit kontinuierlich variierendem Eigenschaftsprofil aufgrund einer kontinuierlich sich verändernden Gefügeausbildung erzeugt werden kann.

Auf diese Weise lässt sich insbesondere eine Schaufel und insbesondere eine Laufschaufel einer Strömungsmaschine mit einem angepassten Eigenschaftsprofil herstellen, wobei beispielsweise im Schaufelfußbereich ein Gefüge eingestellt werden kann, welches eine verbesserte Ermüdungseigenschaft aufweist, während im Schaufelblattbereich oder im Bereich eines Deckbands eine verbesserte Kriechfestigkeit durch ein entsprechendes Gefüge eingestellt werden kann. Für diesen Fall können beispielsweise im ersten Bauteilbereich, welcher einem Schaufelfuß entspricht, ein feinkörniges Gefüge mit feinen Karbidausscheidungen und im zweiten Bauteilbereich, der dem Schaufelblatt und / oder einem Deckband entspricht, ein grobkörniges Gefüge mit groben Karbidausscheidungen gebildet werden. Neben Karbiden können auch andere Ausscheidungen oder Partikel, wie beispielsweise Oxide oder ähnliche Verbindungen, Verwendung finden.

### KURZBESCHREIBUNG DER FIGUREN

Die beigefügten Zeichnungen zeigen in rein schematischer Weise in
- Fig.1: eine schematische Darstellung einer Vorrichtung zur generativen Herstellung von Bauteilen am Beispiel des selektiven Laserschmelzens und in
- Fig. 2: eine Darstellung einer Turbinenschaufel, die entsprechend dem erfindungsgemäßen Verfahren hergestellt wird.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

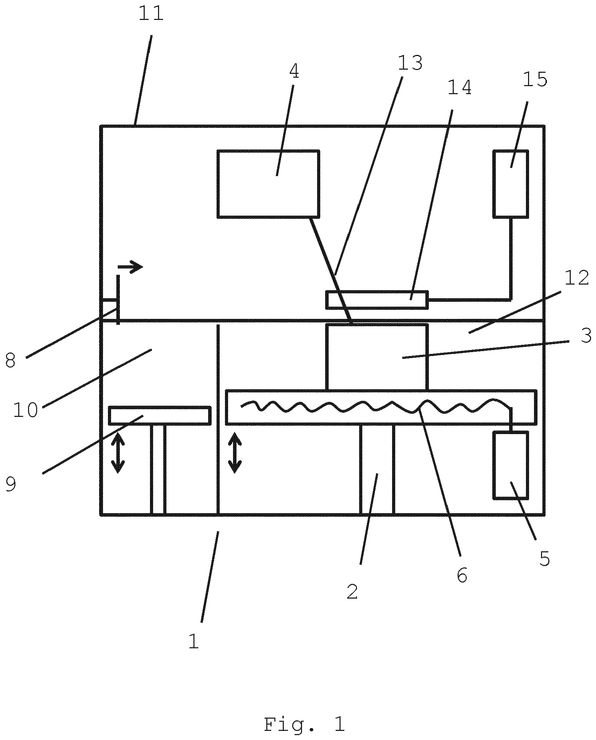

Die Figur 1 zeigt in einer rein schematischen Darstellung eine Vorrichtung 1, wie sie beispielsweise für das selektive Laserschmelzen zur generativen Herstellung eines Bauteils und insbesondere einer Laufschaufel Verwendung finden kann. Die Vorrichtung 1 umfasst einen Hubtisch 2, auf dessen Plattform ein Halbzeug 3 angeordnet ist, auf dem schichtweise Material abgeschieden wird, um ein dreidimensionales Bauteil in Form einer Laufschaufel für eine Strömungsmaschine zu erzeugen. Hierzu wird mittels des Schiebers 8 Pulver 10, das sich oberhalb eines Hubtisches 9 in einem Pulvervorrat befindet, schichtweise über das Halbzeug 3 geschoben und anschließend durch den Laserstrahl 13 eines Lasers 4 durch Aufschmelzen mit dem bereits vorhandenen Halbzeug 3 verbunden. Die Verbindung des Pulvermaterials in einer Pulverschicht mit dem Halbzeug 3 erfolgt durch den Laser 4 abhängig von der gewünschten Kontur des zu fertigenden Bauteils, sodass beliebige, dreidimensionale Formen erzeugt werden können. Entsprechend wird der Laserstrahl 13 über das Pulverbett 12 geführt, um durch unterschiedliche Auftreffpunkte auf dem Pulverbett entsprechend der Kontur des dreidimensionalen Bauteils in der der erzeugten Schichtebene entsprechenden Schnittebene Pulvermaterial aufzuschmelzen und mit dem bereits erzeugten Teil eines Bauteils oder einem anfänglich bereit gestellten Substrat zu verbinden. Hierbei kann der Laserstrahl 13 durch eine geeignete Ablenkeinheit über die Oberfläche des Pulverbetts 12 geführt werden und/oder das Pulverbett könnte gegenüber dem Laserstrahl 13 bewegt werden.

Um unerwünschte Reaktionen mit der Umgebungsatmosphäre beim Aufschmelzen oder Sintern zu vermeiden, kann der Prozess in einem abgeschlossenen Raum, der durch ein Gehäuse 11 der Vorrichtung 1 bereit gestellt wird, stattfinden und es kann zudem eine inerte Gasatmosphäre bereit gestellt werden, um beispielsweise Oxidation des Pulvermaterials und dergleichen beim Abscheiden zu vermeiden. Als inertes Gas kann beispielsweise Stickstoff verwendet werden, welches über eine nicht dargestellte Gasversorgung bereitgestellt wird.

Anstelle des Inertgases könnte auch ein anderes Prozessgas verwendet werden, wenn beispielsweise eine reaktive Abscheidung des Pulvermaterials gewünscht ist.

Darüber hinaus sind auch andere Strahlungsarten denkbar, wie beispielsweise Elektronenstrahlen oder andere Teilchenstrahlen oder Lichtstrahlen, die bei der Stereolithographie eingesetzt werden.

Zur Einstellung der gewünschten Temperaturen im erzeugten Bauteil 3 und / oder im Pulverbett 12 ist im Hubtisch eine elektrische Widerstandsheizung mit einer Widerstandsheizungssteuerung 5 und einem elektrischen Heizdraht 6 vorgesehen, so dass das Pulverbett 12 und das Bauteil 3 durch entsprechendes Erwärmen von unten auf eine gewünschte Temperatur vorerwärmt werden können und / oder ein gewünschter Temperaturgradient, insbesondere zu der gerade bearbeiteten Schicht an der Oberfläche des Pulverbetts, eingestellt werden kann. In ähnlicher Weise ist eine Beheizung mit einer Heizungseinrichtung von der Oberseite des Pulverbetts 12 und des bereits erstellten Bauteils 3 vorgesehen, die bei dem gezeigten Ausführungsbeispiel durch eine Induktionsheizung mit einer Induktionsspule 14 und einer Induktionsheizungssteuerung 15 gebildet ist. Die Induktionsspule 14 umgibt hierbei den Laserstrahl 13 und ist bei Bedarf parallel zur Oberfläche des Pulverbetts 12 entsprechend dem Laserstrahl 13 bewegbar.

Anstelle der dargestellten Induktionsheizung kann auch jede andere Heizungsart, die eine Erwärmung des Pulverbetts 12 und / oder des bereits erzeugten Bauteils 3 von der Oberseite ermöglicht, vorgesehen werden, wie beispielsweise Strahlungsheizgeräte, wie Infrarotstrahler und dergleichen. In gleicher Weise kann auch die Widerstandsheizung 5, 6 durch geeignete andere Heizungsarten, die eine Erwärmung des Pulverbetts 12 und des bereits erzeugten Bauteils 3 von unten ermöglichen, ersetzt werden. Darüber hinaus können weitere Heizeinrichtungen umgebend um das bereits erzeugte Bauteil 3 und / oder das Pulverbett 12 vorgesehen werden, um eine seitliche Erwärmung des Pulverbetts 12 und / oder des bereits erzeugten Bauteils 3 zu ermöglichen.

Neben Heizeinrichtungen können auch Kühleinrichtungen oder kombinierte Heiz - / Kühleinrichtungen vorgesehen werden, um neben einer Erwärmung des bereits erzeugten Bauteils 3 und des Pulverbetts 12 auch eine gezielte Abkühlung vornehmen zu können, um dadurch den Temperaturhaushalt im Pulverbett 12 und / oder dem erzeugten Bauteil 3, insbesondere in Bezug auf die durch den Laserstrahl 13 aufgeschmolzene Pulverschicht und die Erstarrungsfront an dem aufgeschmolzenem Pulvermaterial gezielt einstellen und beeinflussen zu können.

Erfindungsgemäß kann das Bauteil in mindestens zwei Bauteilbereiche unterteilt sein, die zwar bezüglich der chemischen Zusammensetzung aus dem gleichen Werkstoff aufgebaut sind, aber durch Verwendung unterschiedlicher Pulver und / oder Prozessparameter bei der additiven Fertigung mit unterschiedlichen Gefügen ausgebildet werden. Hierzu muss lediglich beim Wechsel von einem Bauteilbereich zum anderen Bauteilbereich ein entsprechender Austausch des Pulvermaterials und / oder eine Änderung der Abscheideparameter bei der Durchführung des additiven Herstellungsprozesses vorgenommen werden.

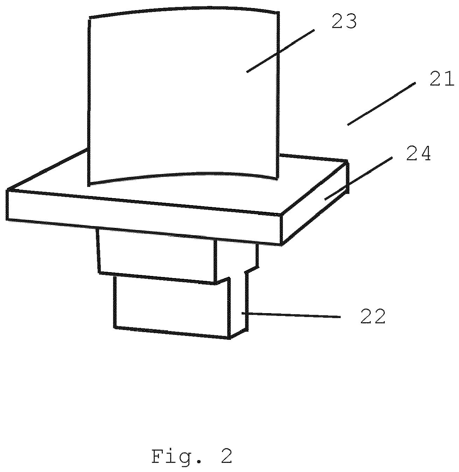

Die Figur 2 zeigt eine Schaufel 21 einer Strömungsmaschine mit einem Schaufelblatt 22 und einem Schaufelfuß 23 sowie einem zwischen Schaufelblatt 22 und Schaufelfuß 23 angeordneten, inneren Deckband 24. Die Schaufel 21 ist beispielsweise aus einer Ni - Basissuperlegierung gebildet, wie sie beispielsweise unter der Handelsbezeichnung IN 718 bekannt ist. Allerdings sind auch andere Ni - Basissuperlegierungen oder andere Hochtemperaturlegierungen wie beispielsweise Fe - Basissuperlegierungen oder Co - Basissuperlegierungen denkbar.

Die Schaufel 21 ist additiv aus einem Pulvermaterial der Ni - Basissuperlegierung durch selektives Laserstrahlschmelzen beispielsweise mit einer Vorrichtung aus Fig. 1 gebildet, wobei schichtweise entsprechend dem Querschnitt der Schaufel 21 in einer entsprechenden Aufbauschicht auf dem bereits hergestellten Teil der Schaufel 21 durch Aufschmelzen und Erstarren von Pulver aus der Ni - Basissuperlegierung die Schaufel 21 gebildet wird. Dadurch wird die gesamte Schaufel 21 schichtweise aus der Ni - Basissuperlegierungen aufgebaut.

Gemäß der Erfindung werden jedoch zwei Bauteilbereiche der Schaufel 21 in unterschiedlicher Art und Weise gebildet, um dadurch in den beiden Bauteilbereichen unterschiedliche Gefügeausbildungen und somit unterschiedliche Eigenschaftsprofile zu erzeugen.

Der erste Bauteilbereich wird durch den Schaufelfuß 22 gebildet, wobei in diesem Bereich ein möglichst feinkörniges Gefüge der Ni - Basissuperlegierung mit feinkörnigen Karbid - Ausscheidungen gebildet wird, um ein vorteilhaftes Ermüdungsverhalten mit einer hohen Ermüdungsfestigkeit einzustellen. Dies kann dadurch erreicht werden, dass ein feinkörniges Ausgangspulver für die additive Herstellung der Schaufel 21 gewählt wird als für die Herstellung des restlichen Teils der Schaufel 21. Alternativ oder zusätzlich ist es auch möglich, die Prozessparameter bei der additiven Herstellung geeignet zu wählen, wie z.B. die Baugeschwindigkeit im Bereich des Schaufelfußes 22 höher zu wählen als im Rest der zu bildenden Schaufel 21, sodass aufgrund höherer, eingebrachter Schmelzenergie sowie kurzer Verweildauer des Laserstrahls zum Aufschmelzen des Pulvers und einer höheren Abkühlungsrate beim Erstarren der Schmelze mehr Erstarrungskeime gebildet werden und somit ein feineres Gefüge eingestellt werden kann als im übrigen Bereich der Schaufel 21.

Entsprechend können das Schaufelblatt 3 und / oder das innere Deckband 4 bzw. der Übergangsbereich zwischen Schaufelblatt 3 und innerem Deckband 4 als ein zweiter Bauteilbereich definiert werden, in welchem durch Verwendung eines gröberen Ausgangspulvers und / oder angepasster Prozessparameter bei der additiven Fertigung z.B. hinsichtlich einer langsameren Aufbaugeschwindigkeit mit langsamerem Aufschmelzen, längerer Verweildauer des Laserstrahls im Bereich des aufgeschmolzenen Pulvers und somit längerer Haltedauer des Pulvers im aufgeschmolzenen Zustand sowie langsamer Abkühlung ein gröberes Gefüge mit größeren Karbid - Ausscheidungen als im ersten Bauteilbereich oder weiteren Bauteilbereichen eingestellt werden kann, was dazu führt, dass die Kriechbeständigkeit verbessert wird.

So können beispielsweise bei einer Ni - Basissuperlegierungen im ersten Bauteilbereich im Bereich des Schaufelfußes 22 Korngrößen bis maximal 500 µm, vorzugsweise bis maximal 100 µm eingestellt werden, während die Karbid - Ausscheidungen eine maximale Größe von 30 µm, vorzugsweise maximal 10 µm aufweisen können, während im zweiten Bauteilbereich im Bereich des Schaufelblatts Korngrößen von über 500 µm möglich sind. Die Korngröße kann hierbei als mittlere Korngröße gemäß bekannter Korngrößenbestimmungsverfahren oder als die maximale Erstreckung der Körner in einer Richtung ermittelt werden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Vorrichtung
- 2: Hubtisch
- 3: Halbzeug bzw. hergestelltes Bauteil
- 4: Laser
- 5: Widerstandsheizungssteuerung
- 6: Heizdraht
- 8: Schieber
- 9: Hubtisch
- 10: Pulver
- 11: Gehäuse
- 12: Pulverbett
- 13: Laserstrahl
- 14: Induktionsspule
- 15: Induktionsheizungssteuerung
- 21: Schaufel
- 22: Schaufelfuß
- 23: Schaufelblatt
- 24: Deckband

## Patentansprüche

1. Verfahren zur Herstellung eines Bauteils (3, 21) einer Strömungsmaschine aus einer Metalllegierung, welches folgende Schritte umfasst:
Definieren von mindestens einem ersten Bauteilbereich (22), der ein erstes Eigenschaftsprofil aufweisen soll, und von mindestens einem zweiten Bauteilbereich (23,24),
der ein zweites Eigenschaftsprofil aufweisen soll, welches von dem ersten Eigenschaftsprofil unterschiedlich ist,
Bereitstellen mindestens eines Pulvers (10) aus der Metalllegierung oder von mehreren unterschiedlichen Pulvern (10) von Bestandteilen der Metalllegierung,
additive Fertigung des Bauteils (3,21) aus dem mindestens einen Pulver, wobei das Pulver zur stoffschlüssigen Verbindung der Pulverpartikel untereinander und mit einem Substrat oder einem bereits hergestellten Teil des Bauteils aufgeschmolzen wird und wobei die Pulverpartikel zur Ausbildung des ersten Bauteilbereichs und die Pulverpartikel zur Ausbildung des zweiten Bauteilbereichs unterschiedlich sind und / oder unter derart unterschiedlichen Bedingungen additiv abgeschieden werden, sodass sich im ersten Bauteilbereich und im zweiten Bauteilbereich unterschiedliche Gefüge des abgeschiedenen Materials ergeben.

2. Verfahren nach Anspruch 1,
**dadurch gekennzeichnet, dass**
bei der additiven Fertigung das Bauteil (3,21) schichtweise auf einem Substrat oder einem vorher erzeugten Teil des Bauteils aufgebaut wird, wobei ein schichtweiser Aufbau durch lagenweises Auftragsschweißen oder lagenweises Aufschmelzen von Pulvermaterial mit einem energiereichen Strahl und lagenweises Erstarren der Pulverschmelze erfolgt.

3. Verfahren nach Anspruch 2,
**dadurch gekennzeichnet, dass**
der energiereiche Strahl ein Laser - oder Elektronenstrahl ist.

4. Verfahren nach einem der vorhergehenden Ansprüche,
**dadurch gekennzeichnet, dass**
vor dem Aufschmelzen eine Vorwärmung des Pulvermaterials (10) erfolgt, insbesondere durch Strahlungsheizung oder induktiver Heizung.

5. Verfahren nach einem der vorhergehenden Ansprüche,
**dadurch gekennzeichnet, dass**
die unterschiedlichen Bedingungen zum Aufschmelzen des Pulvers mindestens eine Komponente aus der Gruppe umfassen, die unterschiedliche Aufheizenergie, unterschiedliche Strahlenergie, unterschiedliche Aufschmelztemperaturen, unterschiedliche Aufschmelzraten, unterschiedliche Vorwärmzeiten, unterschiedliche Haltezeiten im aufgeschmolzenem Zustand, unterschiedliche Abkühlbedingungen, unterschiedliche Abkühlgeschwindigkeiten, unterschiedliche Temperaturgradienten, unterschiedliche Umgebungsdrücke und unterschiedliche Abscheidegeschwindigkeiten aufweisen.

6. Verfahren nach einem der vorhergehenden Ansprüche,
**dadurch gekennzeichnet, dass**
das Bauteil im ersten Bauteilbereich (22) und im zweiten Bauteilbereich (23,24) aus einer Metalllegierung gleicher chemischer Zusammensetzung gebildet wird.

7. Verfahren nach einem der vorhergehenden Ansprüche,
**dadurch gekennzeichnet, dass**
die unterschiedlichen Pulverpartikel und / oder die unterschiedlichen Bedingungen zum Aufschmelzen des Pulvers bei der Herstellung des ersten und / oder des zweiten Bauteilbereichs über den entsprechenden ersten und / oder den zweiten Bauteilbereich und / oder im Übergangsbereich zwischen dem ersten und zweiten Bauteilbereich so variiert werden, dass im entsprechenden ersten und / oder zweiten Bauteilbereich und / oder im Übergangsbereich ein Gradientenwerkstoff mit variierendem Eigenschaftsprofil abgeschieden wird.

8. Verfahren nach einem der vorhergehenden Ansprüche,
**dadurch gekennzeichnet, dass**
das Eigenschaftsprofil des ersten Bauteilbereichs (22) eine verbesserte Ermüdungsfestigkeit als im zweiten Bauteilbereich umfasst und / oder dass das Eigenschaftsprofil im zweiten Bauteilbereich (23,24) eine höhere Kriechfestigkeit als im ersten Bauteilbereich umfasst.

9. Verfahren nach einem der vorhergehenden Ansprüche,
**dadurch gekennzeichnet, dass**
das Bauteil eine Schaufel (21) einer Strömungsmaschine, insbesondere eine Laufschaufel ist, wobei der erste Bauteilbereich den Schaufelfuß (22) umfasst und der zweite Bauteilbereich den Bereich eines inneren und / oder äußeren Deckbands (24) und / oder den Bereich des Schaufelblatts (23) und / oder den Übergangsbereich zwischen Deckband und Schaufelblatt umfasst.

10. Verfahren nach einem der vorhergehenden Ansprüche,
**dadurch gekennzeichnet, dass**
das Bauteil aus einer Fe - , Co - oder Ni - Basissuperlegierung gebildet ist.

11. Verfahren nach einem der vorhergehenden Ansprüche,
**dadurch gekennzeichnet, dass**
im ersten Bauteilbereich (22) ein feinkörniges Gefüge mit feinen Ausscheidungen, insbesondere Karbidausscheidungen, und / oder im zweiten Bauteilbereich (23,24) ein grobkörniges Gefüge mit groben Ausscheidungen, insbesondere Karbidausscheidungen ausgebildet wird.

12. Bauteil einer Strömungsmaschine aus einer Fe -, Co - oder Ni - Basissuperlegierung, insbesondere hergestellt nach dem Verfahren nach einem der vorhergehenden Ansprüche, welches einstückig durch additive Fertigung gefertigt ist, wobei das Bauteil (3,21) mindestens einen ersten Bauteilbereich (22), der ein erstes Eigenschaftsprofil aufweist, und mindestens einen zweiten Bauteilbereich (23,24) umfasst, der ein zweites Eigenschaftsprofil aufweist, welches von dem ersten Eigenschaftsprofil unterschiedlich ist, wobei erster und zweiter Bauteilbereich unterschiedliche Gefügeausbildungen aufweisen.

13. Bauteil nach Anspruch 12,
**dadurch gekennzeichnet, dass**
das Bauteil eine Schaufel (21) einer Strömungsmaschine, insbesondere eine Laufschaufel ist, wobei der erste Bauteilbereich den Schaufelfuß (22) umfasst und der zweite Bauteilbereich den Bereich eines inneren und / oder äußeren Deckbands (24) und / oder den Bereich des Schaufelblatts (23) und / oder den Übergangsbereich zwischen Deckband und Schaufelblatt umfasst.

14. Bauteil nach Anspruch 12 oder 13,
**dadurch gekennzeichnet, dass**
das Eigenschaftsprofil des ersten Bauteilbereichs (22) eine verbesserte Ermüdungsfestigkeit als im zweiten Bauteilbereich (23,24) umfasst und / oder dass das Eigenschaftsprofil im zweiten Bauteilbereich (23,24) eine höhere Kriechfestigkeit als im ersten Bauteilbereich (22) umfasst.

15. Bauteil nach einem der Ansprüche 12 bis 14,
**dadurch gekennzeichnet, dass**
im ersten Bauteilbereich (22) ein feinkörniges Gefüge mit feinen Ausscheidungen, insbesondere Karbidausscheidungen und / oder im zweiten Bauteilbereich (23,24) ein grobkörniges Gefüge mit groben Ausscheidungen, insbesondere Karbidausscheidungen ausgebildet ist.
